# FASCICULE DE BREVET EUROPEEN

(11) **EP 0 776 788 B1**
(45) Date de publication et mention de la délivrance du brevet: **24.03.1999**
(21) Numéro de dépôt: 95440083.4
(22) Date de dépôt: 01.12.1995
(51) Int. Cl.: B60R 13/00, G09F 7/00

(54) **Procédé pour la pose de monogrammes sur une surface de réception**
Vorrichtung zum Anbringen von Kennzeichnungen auf eine Oberfläche
Method for applying indicia on a surface

(43) Date de publication de la demande: 04.06.1997
(73) Titulaire: NEYR PLASTIQUES (S.A.), F-01580 Izernore (FR)
(72) Inventeur: Winterer, Jean, F-39170 Lanvans les st Claude (FR)
(74) Mandataire: Littolff, Denis

(56) Documents cités:
- EP-A- 0 166 472
- GB-A- 1 292 467
- GB-A- 2 126 529
- GB-A- 2 250 369
- US-A- 4 172 331
- US-A- 4 604 153
- PATENT ABSTRACTS OF JAPAN vol. 13 no. 497 (M-889) ,9 Novembre 1989 & JP-A-01 198330 (TAIHEISHIYA K. K.) 9 Août 1989,
- PATENT ABSTRACTS OF JAPAN vol. 16 no. 309 (P-1382) ,8 Juillet 1992 & JP-A-04 086887 (KANTOU KASEI K. K. K.) 19 Mars 1992,

## Description

La présente invention concerne un procédé pour la pose d'une marque, ou plus généralement d'un monogramme comportant plusieurs éléments tels que lettres, chiffres ou tous autres signes distinctifs qui sont couramment fixés sur des surfaces de réception planes ou galbées, notamment des carrosseries d'automobiles.

Par monogramme, on entend par exemple la marque du constructeur (RENAULT, MERCEDES, VOLVO, etc) ou son logo (le "chevron" distinctif de Citroën), ou encore d'autres indications liées aux performances revendiquées pour le véhicule (GTI) ou à sa désignation propre par le constructeur (SAFRANE, XANTIA, 300 SL, etc.).

Tous ces monogrammes sont constitués d'éléments individuels, lettres, chiffres ou signes, qui sont disposés selon des normes très contrôlées, par exemple en ce qui concerne non seulement leur orientation, mais leur distance mutuelle par rapport à leurs dimensions, qui doit, quelles que soient ces dimensions, créer chez l'observateur la même impression d'ensemble.

Actuellement, pour respecter ces normes, l'ensemble des éléments constituant un "monogramme" constitue une pièce unique, lesdits éléments étant créés en étant reliés les uns aux autres, par exemple en étant réunis sur une plaquette rectangulaire noire, ou par une bandelette, métallisée ou non. C'est une telle pièce qui est fixée sur la surface de réception, par un adhésif ou par un moyen mécanique.

Un inconvénient inhérent à cette technique est que, de par son principe même, il en résulte que, tous les éléments de chaque monogramme étant reliés ensemble, il est impossible de les mouler individuellement, de manière à créer un stock de chaque élément, par exemple un stock de chaque lettre de l'alphabet ou un stock de chacun des 10 chiffres etc., auquel on pourrait faire appel pour créer d'autres ensembles constituant d'autres "monogrammes". Au surplus, on peut considérer que la présence d'un moyen de réunion (plaquette de fond noire ou bandelette de base commune) rend un tel ensemble assez inesthétique.

Il existe bien des cas particuliers où, pour améliorer cette esthétique, les éléments sont créés, posés et immobilisés un par un, mais cela impose l'intervention manuelle délicate d'un personnel spécialisé à qui il est cependant très difficile d'éviter des irrégularités d'orientation et de disposition, alors qu'une telle opération est pourtant coûteuse.

Une solution non manuelle est toutefois divulguée dans le document GB-A-2 126 529, dans lequel il ne subsiste, après apposition du monogramme sur sa surface de réception, aucun moyen de réunion. Les éléments formant le monogramme sont obtenus par électroformage sur une plaquette métallique sur laquelle a été effectué un dépôt résistant ne laissant libre, pour ledit électroformage, que les empreintes desdits éléments, lesquels disposent alors d'un moyen de positionnement relatif.

Lorsque l'électroformage est achevé, les éléments constitués sont retirés de la plaque métallique support à l'aide d'une bande en matériau synthétique souple muni d'une couche adhésive. Les éléments s'y collent, dans leur positionnement relatif définitif, et sont à leur tour recouverts d'un adhésif plus puissant que le précédent. Il n'y a alors plus qu'à appliquer la bande souple sur la surface de réception, à pression, et à la retirer lorsque le second adhésif agit.

Dans cette solution, s'il est vrai qu'on supprime tout moyen de réunion entre les éléments, on ne peut pourtant pas fabriquer ces derniers individuellement pour un assemblage à partir des stocks de chaque signe.

Le document GB-A-2 250 369 concerne un procédé du type énoncé dans le préambule de la revendication principale. Il propose quant à lui une solution dans laquelle les signes sont réalisés individuellement, puis disposés sur un support thermoformé comportant, en creux, l'empreinte desdits signes. Ces empreintes réalisent le positionnement relatif correct des éléments, sur la face libre desquels on dispose une couche adhésive avant d'appliquer l'ensemble sur la surface de réception.

Les différents éléments sont clipsés dans leurs évidements respectifs, qui nécessitent une succession d'applications manuelles pour réaliser les combinaison de signes que l'on veut obtenir.

L'invention a trait à la mise en oeuvre d'un procédé encore plus simple, peu coûteux et éliminant tous les inconvénients précités.

Dans son principe, le procédé selon l'invention, pour la pose, sur une surface de réception plane ou de galbe quelconque, d'une marque, ou plus généralement d'un monogramme comportant plusieurs éléments, tels que lettres, chiffres ou tous autres signes figuratifs isolés individuellement les uns des autres, comprenant l'utilisation d'un outil de réalisation d'un support d'immobilisation qui assure temporairement leur liaison, est caractérisé en ce que :
- Dans une première étape, chacun desdits éléments individuels est créé par injection d'une matière plastique décorable ;
- Dans une seconde étape, ces éléments subissent un traitement de décoration ;
- Dans une troisième étape, lesdits éléments décorés sont disposés, dans un second outil d'injection, dans l'orientation et la disposition qu'ils devront avoir sur ladite surface ;
- Dans une quatrième étape, lesdits éléments subissent, ainsi disposés dans ledit second outil, une opération de surmoulage par injection d'une matière plastique destinée à constituer un support d'immobilisation dont les caractéristiques sont telles qu'elle assure temporairement la liaison desdits éléments individuels entre eux, mais sans aucune adhérence chimique ;
- Dans une cinquième étape, on applique à l'ensemble un matériau rendant adhésifs la face postérieure desdits éléments seuls, et non la matière de support, par exemple en raison du fait que la matière adhésive n'adhère en fait qu'auxdits éléments et pas à la matière d'immobilisation, ou encore en raison du fait que ladite matière adhésive n'est appliquée qu'auxdits éléments ;
- Dans une sixième étape, on applique l'ensemble sur ladite surface, seuls lesdits éléments adhérant à ladite surface en conservant l'orientation et la disposition qui leur ont été données à la troisième étape ; et
- Dans une septième et dernière étape, on élimine la matière de support utilisée dans la quatrième étape, et n'ayant pas adhéré à ladite surface dans la sixième étape, ce qui laisse ledit monogramme décoré fixé dans l'orientation et la disposition voulue de ses éléments sur ladite surface de réception.

A l'issue de cette septième étape, le monogramme est obtenu sur la surface de réception avec la qualité qui exigeait autrefois cette opération manuelle longue et délicate, les éléments individuels étant bien isolés et ressortant bien sur la surface de réception.

Dans la mise en pratique du procédé selon l'invention, le choix des matériaux n'est pas réellement critique, dès lors que l'on fait appel à ceux de ces matériaux qui sont déjà utilisés pour des applications semblables et dont les propriétés sont bien connues.

Ainsi, les éléments individuels peuvent être moulés par injection en polymère acrylonitrile / butadiène / styrène (ABS), polystyrène / acrylonitrile (SAN) ou matière thermoplastique semblable.

De même, le traitement de ces éléments individuels peut être un traitement de décoration répondant aux spécifications de chaque cahier des charges des constructeurs, par exemple une opération de chromage en qualité dite extérieure automobile.

La matière plastique servant à la liaison et à l'immobilisation des éléments décorés peut être, par exemple, du polyéthylène basse densité, ou du polypropylène.

Cette matière d'immobilisation mutuelle des éléments individuels est injectée alors que lesdits éléments ont été disposés dans le second outil d'injection, dont l'empreinte comporte à cet effet des repères assurant une disposition correcte, par exemple des creux correspondant à la forme des éléments, ces creux étant convenablement répartis à cet effet.

Après extraction de l'ensemble des éléments réunis par la matière d'immobilisation, ladite forme de l'empreinte a pour conséquence que la partie postérieure des éléments est en léger relief par rapport à la matière d'immobilisation. Ils peuvent donc aisément recevoir sélectivement l'adhésif.

Pour mieux faire comprendre l'invention, on va décrire plus en détail la mise en oeuvre des sept étapes précitées, en se référant à la description suivante, correspondant aux dessins annexés dont les schémas sont numérotés en fonction desdites étapes.

Sur ces schémas, on a figuré un fragment de monogramme, dont les deux premiers éléments sont les lettres majuscules N et Y, qui doivent être, à la fois bien entendu alignées et séparées d'un espace d.

Dans l'étape (1), chaque lettre N et Y est moulée individuellement, par injection dans un moule M1, M2 à partir d'un collecteur C. A l'issue du processus de moulage, chaque lettre est recueillie individuellement, et à l'étape (2), elle subit un traitement de décoration, symbolisé ici par une pulvérisation D1, D2, par exemple un chromage.

A l'étape (3), on dispose les lettres chromées dans un outil d'injection I, de manière qu'elles soient correctement alignées horizontalement et verticalement, et espacées d'une distance d, comme indiqué. Bien entendu, les autres éléments du monogramme sont disposés au-delà de Y dans le même outil. Le même schéma symbolise l'injection dans I d'une matière plastique telle que du polyéthylène basse densité ou du polypropylène P, qui va surmouler les éléments N, Y ..., en les reliant temporairement et en les immobilisant.

Comme indiqué ci-dessus, et comme il apparaît sur le schéma 5, qui est une coupe suivant V - V du schéma 4, l'outil I présentant des creux de repérage des éléments N, Y, ..., la face postérieure de ces éléments présente ensuite un relief R par rapport à la face postérieure de la matière d'immobilisation P.

A l'issue de cette étape (4), on applique ainsi, dans une étape suivante (5), un adhésif qui n'intéresse donc que les faces postérieures des reliefs R des éléments N, Y, ... Cela ressort du schéma 5, qui montre les éléments N et Y noyés dans le polyéthylène et ayant reçu sur leur face postérieure l'adhésif A.

A l'étape suivante (6), l'ensemble des éléments N, Y et suivants immobilisés par la matière de liaison P, est appliqué sur la surface de réception S, par exemple la carrosserie d'une automobile, avec une pression symbolisée par la flèche F.

Seuls les éléments N, Y et suivants adhérant à la surface de réception S, il suffit, à l'étape (7) d'éliminer la matière de liaison P, par exemple en la pelant, pour ne laisser en place que les éléments individuels N, Y, ..., fixés sur la surface S, dans l'orientation et la disposition relative souhaitée.

Le résultat est donc bien la fixation, sur la surface S, d'éléments individuels complètement indépendants, par un processus simple, n'impliquant aucune habileté particulière pour l'opérateur.

La surface S peut être par exemple n'importe quelle portion de la carrosserie d'une automobile, par exemple le devant ou les surfaces latérales du capot, l'arrière du coffre ou du hayon, quelle que soit son galbe, puisque le matériau de liaison P peut être relativement souple, par exemple en polyéthylène B.D. ou en polypropylène, ce qui rend sans difficulté l'application de l'ensemble à l'étape 6. Un avantage de l'utilisation selon l'invention, de polyéthylène ou de polypropylène, qui sont des matériaux souples, est donc que l'ensemble formé par les éléments individuels du monogramme et leur matière de liaison, est lui-même souple et peut être adapté à tout galbe de la surface de réception. Toutefois, il s'agit là d'une commodité d'application et non d'une restriction obligatoire : Au contraire, dans le cadre de l'invention, on peut utiliser un matériau de liaison P très rigide et on peut donner alors à l'avance à l'ensemble le galbe souhaité, au cours de la quatrième étape.

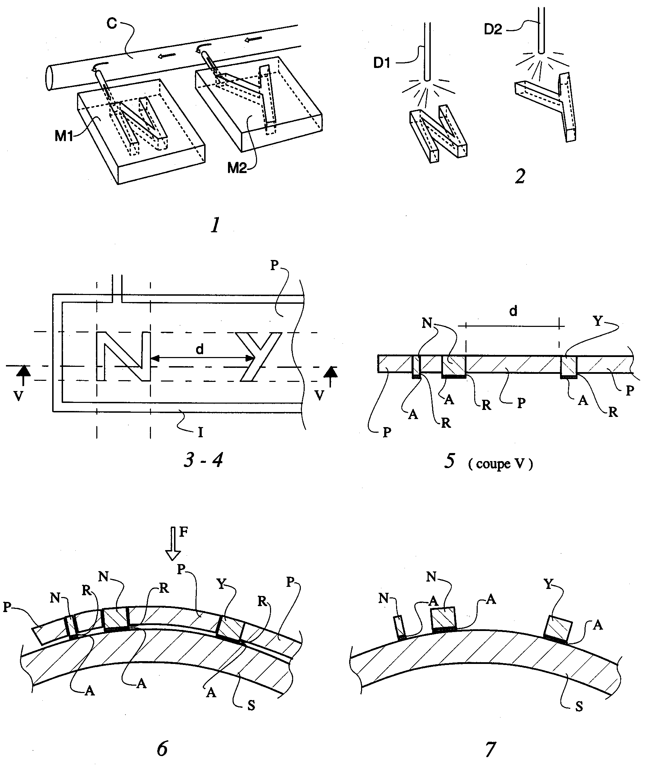

## Revendications

1. Procédé pour la pose, sur une surface de réception (S) plane ou de galbe quelconque, d'une marque, ou plus généralement d'un monogramme comportant plusieurs éléments (N, Y), tels que lettres, chiffres ou tous autres signes figuratifs isolés individuellement les uns des autres, comprenant l'utilisation d'un outil (I) de réalisation d'un support d'immobilisation qui assure temporairement leur liaison,
caractérisé en ce que
- dans une première étape, chacun desdits éléments individuels est créé par injection d'une matière plastique décorable ;
- dans une seconde étape, ces éléments subissent un traitement de décoration (D1, D2) ;
- dans une troisième étape, lesdits éléments décorés (N, Y) sont disposés, dans un second outil d'injection (I), dans l'orientation et la disposition qu'ils devront avoir sur ladite surface (S) ;
- dans une quatrième étape, lesdits éléments (N, Y) subissent, ainsi disposés dans ledit second outil (I), une opération de surmoulage par injection d'une matière plastique (P) destinée à constituer un support d'immobilisation dont les caractéristiques sont telles qu'elle assure temporairement la liaison desdits éléments (N, Y) individuels entre eux, mais sans aucune adhérence chimique ;
- dans une cinquième étape, on applique à l'ensemble un matériau (A) destiné à rendre adhésive la face postérieure desdits éléments (N, Y) seuls, et non la matière de support (P) ;
- dans une sixième étape, on applique l'ensemble sur ladite surface (S), seuls lesdits éléments adhérant à ladite surface (S) en conservant l'orientation et la disposition qui leur ont été données à la troisième étape ; et
- dans une septième étape, on élimine la matière de support (P) utilisée dans la quatrième étape, et n'ayant pas adhéré à ladite surface (S) dans la sixième étape, ce qui laisse ledit monogramme décoré fixé dans l'orientation et la disposition voulue de ses éléments (N, Y) sur ladite surface de réception (S).

2. Procédé selon la revendication 1, caractérisé en ce que la matière plastique décorable est par exemple de l'ABS, du SAN ou analogue.

3. Procédé selon l'une des revendications précédentes, caractérisé en ce que la traitement de décoration appliqué à la seconde étape est du type répondant à un cahier des charges spécifique, par exemple un chromage (D1, D2) en qualité extérieure automobile.

4. Procédé selon l'une quelconque des revendications précédentes, caractérisé en ce que la matière plastique (P) assurant le support d'immobilisation des éléments individuels (N, Y) est par exemple du polyéthylène basse densité, ou du polypropylène.

5. Procédé selon l'une quelconque des revendications précédentes, caractérisé en ce que l'outil (I) utilisé à la troisième étape est une empreinte comportant, en creux, la forme assurant l'orientation et la disposition des éléments (N, Y), par exemple ayant la forme de chaque élément (N), (Y) successif ou d'une série d'éléments identiques, dont on peut ainsi constituer un stock, lesdits éléments (N, Y) étant ainsi légèrement en relief (R) par rapport à la face postérieure de l'ensemble formé par ces éléments (N, Y) et leur matière d'immobilisation (P).

6. Procédé selon l'une quelconque des revendications précédentes, caractérisé en ce que l'on procède par pelage à l'élimination de la matière support d'immobilisation (P), après application de l'ensemble de cette matière et des éléments individuels sur la surface de réception (S), et fixation desdits éléments individuels (N, Y) grâce au matériau adhésif (A).

7. Procédé selon l'une quelconque des revendications précédentes, caractérisé en ce que la matière d'immobilisation (P) est souple et permet la pose de chaque ensemble destiné à créer le monogramme sur une surface de réception (S) de galbe quelconque.

8. Procédé selon l'une quelconque des revendications 1 à 6, caractérisé en ce que la matière d'immobilisation (P) est rigide, et chaque ensemble reçoit à la quatrième étape la forme définitive correspondant au galbe de la surface de réception (S).

## Claims

1. Process for application, on any flat or curved reception surface (S) of a mark, or more generally of a monogram including a plurality of elements (N, Y), such as letters, numbers, or any other symbolic signs individually separated from each other, comprising the use of a tool (I) for creating an immobilising support which connects them temporarily, characterised by the fact that
• in a first step, each of the said individual elements is created by injection of a plastics material which can be decorated;
• in a second step, these elements undergo a decoration treatment (D1, D2);
• in a third step, the said decorated elements (N, Y) are arranged, in a second injection tool (I), in the orientation and arrangement which they are to have on the said surface (S);
• in a fourth step, the said elements (N, Y), thus arranged in the said second tool (I), undergo an overmoulding operation by injection of a plastic material (P) intended to form an immobilising support the characteristics of which are such that it temporarily joins the said individual elements (N, Y) together, but without any chemical adhesion;
• in a fifth step, to the assembly is applied a material (A) intended to render adhesive the back surfaces of the said elements (N, Y) alone, and not the support material (P);
• in a sixth step, the assembly is applied to the said surface (S), only the said elements adhering to the said surface (S) while retaining the orientation and the arrangement imparted to them in the third step; and
• in a seventh step, the support material (P) used in the fourth step, and which has not adhered to the said surface (S) in the sixth step, is removed, which leaves the said decorated monogram fixed in the required orientation and arrangement of its elements (N, Y) on the said reception surface (S).

2. Process as described in claim 1, characterised by the fact that the plastics material which can be decorated is for example ABS, or SAN, or the like.

3. Process as described in one of the preceding claims, characterised by the fact that the decoration treatment applied in the second step is of the type answering to a particular specification, for example chromium plating (D1, D2) of exterior motor vehicle quality.

4. Process as described in any one of the preceding claims, characterised by the fact that the plastics material (P) providing the support for immobilising the individual elements (N, Y) is for example low-density polyethylene, or polypropylene.

5. Process as described in any one of the preceding claims, characterised by the fact that the tool (I) used in the third step is a mould which has sunk in it the shape providing the orientation and arrangement of the elements (N, Y), for example having the shape of each successive element (N, Y) or of a series of identical elements, of which a stock may thus be formed, the said elements (N, Y) thus being slightly in relief (R) relative to the back surface of the assembly formed by these elements (N, Y) and their immobilising material (P).

6. Process as described in any one of the preceding claims, characterised by the fact that the immobilising support material (P) is removed by peeling, after application of the assembly of this material and of the individual elements on the reception surface (S), and fixing of the said individual elements (N, Y) by means of the adhesive material (A).

7. Process as described in any one of the preceding claims, characterised by the fact that the immobilising material (P) is flexible and permits application of each assembly intended to create the monogram on a reception surface (S) having any curvature whatsoever.

8. Process as described in any one of claims 1 to 6, characterised by the fact that the immobilising material (P) is rigid, and in the fourth step each assembly receives the final shape corresponding to the curvature of the reception surface (S).

## Patentansprüche

1. Verfahren zur Anbringung einer Marke oder allgemeiner eines Monogramms, das mehrere Elemente (N, Y) wie etwa Buchstaben, Ziffern oder sämtliche anderen bildhaften Zeichen enthält, die einzeln voneinander isoliert sind, auf einer ebenen oder beliebig gekrümmten Aufnahmefläche (S), umfassend die Verwendung eines Werkzeugs (I) zur Verwirklichung eines Immobilisierungsträgers, der vorübergehend ihre Verbindung gewährleistet,
dadurch gekennzeichnet, daß
- in einem ersten Schritt jedes der einzelnen Elemente durch Einspritzen eines verzierbaren Kunststoffs erzeugt wird;
- in einem zweiten Schritt diese Elemente einer Verzierungsbehandlung (D1, D2) unterworfen werden;
- in einem dritten Schritt die verzierten Elemente (N, Y) in einem zweiten Einspritzwerkzeug (I) in einer Orientierung und Anordnung angeordnet werden, die sie auf der Oberfläche (S) haben sollen;
- in einem vierten Schritt die Elemente (N, Y), die somit im zweiten Werkzeug (I) angeordnet sind, einer Abformungsoperation durch Einspritzen eines Kunststoffs unterworfen werden, der dazu bestimmt ist, einen Immobilisierungsträger zu bilden, dessen Eigenschaften derart sind, daß er vorübergehend die Verbindung der einzelnen Elemente (N, Y) untereinander gewährleistet, jedoch ohne jegliche chemische Haftung;
- in einem fünften Schritt auf die Gesamtheit ein Material (A) aufgebracht wird, das dazu vorgesehen ist, lediglich die hintere Fläche der Elemente (N, Y) und nicht das Material des Trägers (P) haftend zu machen;
- in einem sechsten Schritt die Gesamtheit auf die Oberfläche (S) aufgebracht wird, wobei nur die Elemente auf der Oberfläche (S) haften und die Orientierung und die Anordnung, die ihnen im dritten Schritt verliehen worden ist, beibehalten; und
- in einem siebten Schritt das Trägermaterial (P) entfernt wird, das im vierten Schritt verwendet worden ist und im sechsten Schritt nicht auf der Oberfläche (S) anhaftet, wodurch das verzierte Monogramm in der gewünschten Orientierung und Anordnung seiner Elemente (N, Y) auf der Aufnahmefläche (S) fixiert wird.

2. Verfahren nach Anspruch 1, dadurch gekennzeichnet, daß der verzierbare Kunststoff beispielsweise ABS, SAN oder dergleichen ist.

3. Verfahren nach einem der vorangehenden Ansprüche, dadurch gekennzeichnet, daß die Verzierungsverarbeitung, die im zweiten Schritt ausgeführt wird, von dem Typ ist, der eine Antwort auf ein bestimmtes Pflichtenheft darstellt, beispielsweise eine Verchromung (D1, D2) in Kraftfahrzeug-Außenqualität.

4. Verfahren nach irgendeinem der vorangehenden Ansprüche, dadurch gekennzeichnet, daß der Kunststoff (P), der den Immobilisierungsträger der einzelnen Elemente (N, Y) schafft, beispielsweise Polyethylen mit niedriger Dichte oder Polypropylen ist.

5. Verfahren nach irgendeinem der vorangehenden Ansprüche, dadurch gekennzeichnet, daß das im dritten Schritt verwendete Werkzeug (I) eine Matrize ist, die vertieft die Form aufweist, die die Orientierung und die Anordnung der Elemente (N, Y) gewährleistet und beispielsweise die Form jedes der aufeinanderfolgenden Elemente (N), (Y) oder einer Reihe völlig gleicher Elemente besitzt, so daß daraus ein Stapel gebildet werden kann, wobei die Elemente (N, Y) somit in bezug auf die hintere Fläche der durch diese Elemente (N, Y) und ihr Immobilisierungsmaterial (P) gebildeten Gesamtheit leicht zurückversetzt (R) ist.

6. Verfahren nach irgendeinem der vorangehenden Ansprüche, dadurch gekennzeichnet, daß nach der Anbringung der Gesamtheit aus diesem Material und den einzelnen Elementen auf der Aufnahmefläche (S) und nach der Befestigung der einzelnen Elemente (N, Y) kraft des Klebstoffmaterials (A) die Beseitigung des Immobilisierungsträgermaterials (P) durch chemisches Enthüllen erfolgt.

7. Verfahren nach irgendeinem der vorangehenden Ansprüche, dadurch gekennzeichnet, daß das Immobilisierungsmaterial (P) weich ist und die Anordnung jeder Gesamtheit, die für die Erzeugung des Monogramms auf der Aufnahmefläche (S) mit beliebiger Krümmung bestimmt ist, ermöglicht.

8. Verfahren nach irgendeinem der Ansprüche 1 bis 6, dadurch gekennzeichnet, daß das Immobilisierungsmaterial (P) starr ist und jede Gesamtheit im vierten Schritt die endgültige Form annimmt, die der Krümmung der Aufnahmefläche (S) entspricht.
